# EUROPEAN PATENT APPLICATION

(11) **EP 1 467 181 A2**
(43) Date of publication of application: **13.10.2004**
(21) Application number: 04007453.6
(22) Date of filing: 26.03.2004
(51) Int. Cl.: G01C 21/26

(54) **Navigation device**

(30) Priority: 09.04.2003 JP 2003105420
(71) Applicant: AISIN AW CO., LTD., Anjo-shi Aichi 444-1192 (JP)
(72) Inventor: Naito, Mitsuhiro, Aichi 444-8564 (JP); Yamada, Kunihiro, Aichi 444-8564 (JP)
(74) Representative: Leson, Thomas Johannes Alois, Dipl.-Ing.

(57) **Abstract**

A navigation device **(15)** is provided with a communication portion **(58)** that is capable of communication with a server that distributes data, and a data storage portion **(16)** that stores data downloaded from the server. When start-up of the vehicular navigation device is initiated, communication with the server is executed and data is downloaded prior to the completion of start-up.

## Description

The present invention relates to a navigation device.

Conventionally, systems have been provided (for example, Japanese Patent Laid-Open Publication 2001-148092) having an information center and a navigation device mounted in a vehicle that is capable of communication with the information center. In such systems, when a user such as a driver gets into the vehicle and starts the engine, the navigation device immediately communicates with the information center and obtains data therefrom.

With these systems, while the vehicle is parked, the user can access the information center using, for example, a mobile information terminal or a personal computer in their home or at their office, and conduct a route search by imputing a target destination, search conditions, or the like. Furthermore, when the user gets into the vehicle and starts the engine, the navigation device communicates with the information center, and receives the route guidance data that was searched for by wireless communication, or the like. Accordingly, when the user gets into the vehicle and starts to drive, they can use the route guidance immediately.

However, with such conventional systems, communication between the navigation device and the information center takes place once start-up of the navigation device is completed.

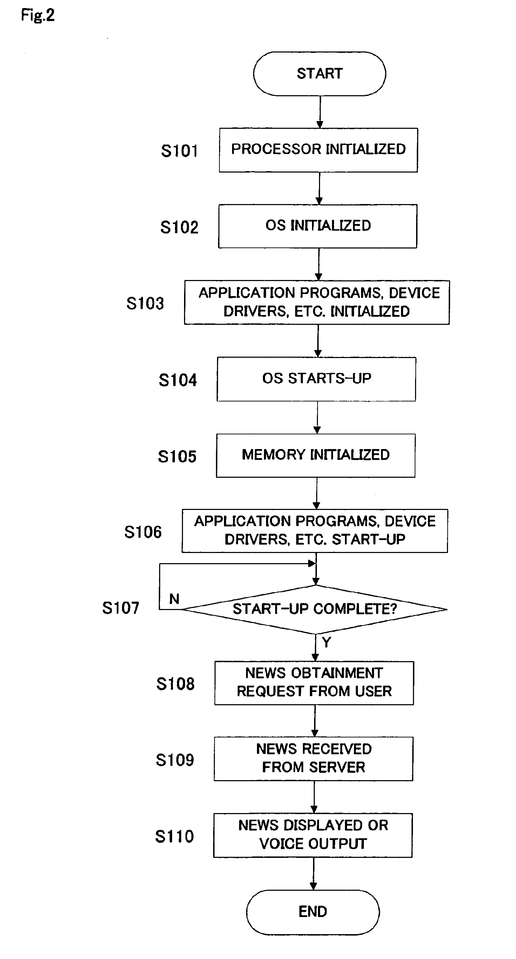

FIG. 2 shows a flow chart for a start-up operation of a navigation device of a conventional system.

First, when the user gets into the vehicle and starts the engine, the navigation device starts up due to an accessory signal being switched to ON; then, a processor of the navigation device is initialized. Next, an operating system (OS) of the navigation device is initialized. Further, application programs, device drivers, and the like, are also initialized. Following this, the operating system starts up and a memory of the navigation device is initialized. Next, after the application programs, device drivers, and the like, have started up, it is determined whether start-up of the navigation device is completed.

Moreover, when start-up of the navigation device is completed, the user operates an input unit of the navigation device so as to make operation thereof possible. Note that, the user operates the input unit to input a request for obtaining information such as news from a server that functions as the information center. Accordingly, a news obtainment request is sent to the server from the navigation device. Then, the server sends news to the navigation device in response to the received news obtainment request. Next, when the news is received from the server, the navigation device executes, for example, display of the news on a display unit, or voice output of the news from a speaker by using TTS (Text-to-Speech; registered trademark) software, which converts the characters or sentences to sound. Thus, it is possible for the user to check the news received from the server.

Next, the flow chart of FIG. 2 will be explained. In step S101, a processor 31 is initialized. In step S102, the operating system is initialized. In step S103, the application programs, the device drivers, and the like, are initialized. In step S 104, the operating system starts up. In step S105, the memory of the navigation device is initialized. In step S106, the application programs, device drivers, and the like, start-up. In step S107, it is determined whether the navigation device has completed start-up or not. In the case that start-up is completed, the routine proceeds to step S 108; in the case that it is not completed, the routine waits until completion. In step S108, the user inputs a news obtainment request. In step S 109, the news is received from the server. In step S110, the news is displayed or voice output.

In this manner, after start-up of the navigation device is completed, communication between the navigation device and the server acting as the information center takes place. Accordingly, it is not possible for the data received from the server to be provided to the user by displaying it on the display unit, or the like, until the time when start-up of the navigation device is completed. Therefore, when it is necessary to check and use the data received from the server before starting vehicle driving, it is not possible for the user to start driving the vehicle immediately.

In light of the above problem of the conventional navigation device, it is an object of the present invention to provide a navigation device which is configured such that communication between the navigation device and the server is executed prior to completion of start-up of the navigation device, thus allowing the user to check and utilize data that is immediately received from the server following initiation of start-up of the navigation device.

In order to achieve the above object, according to the present invention, a navigation device includes a communication portion that is capable of communicating with a server that distributes data, and a data storage portion that stores data that is downloaded from the server. When start-up of the navigation device is initiated, communication with the server is executed and data is downloaded prior to the completion of start-up.

The navigation device according to another aspect of the present invention further includes at least one of a display portion and a voice output portion. With this configuration, after start-up of the navigation device is completed, data stored in the data storage portion is displayed on the display portion, and/or voice output from the voice output portion.

The navigation device according to another aspect of the present invention is configured such that when an operating system starts up following initiation of start-up of the navigation device, a network driver starts up and data is downloaded. Then, following this, start-up of device drivers other than the network driver, and application programs is executed.

The navigation device according to yet another aspect of the present invention is configured such that pre-set data is downloaded from the server.

The navigation device according to yet another aspect of the present invention is configured such that the communication portion is a wireless LAN (Local Area Network) device or a removable cellular terminal.

According to the present invention as disclosed in the above aspects, communication with the server is executed prior to when start up of the navigation device is completed. Accordingly, it is possible for data to be immediately received from the server following the initiation of start-up of the navigation device, and for the user to check and utilize this data.

In the following, the drawings are briefly described.
FIG. 1 is a flow chart showing an operation that is performed in the case that push-type content of a navigation system according to a first embodiment of the present invention is downloaded;
FIG. 2 is a flow chart showing an operation that is performed when a navigation device of a conventional navigation system starts up;
FIG. 3 shows the configuration of the navigation system according to the first embodiment of the present invention;
FIG. 4 shows the configuration of a navigation device according to the first embodiment of the present invention;
FIG. 5 shows a software configuration in the case that an on-board apparatus according to the first embodiment of the present invention is the navigation device for a vehicle.
FIG. 6 is a flow chart showing an operation that is performed when pull-type content of the navigation system according to the first embodiment of the present invention is downloaded;
FIG. 7 is a flow chart showing an operation that is performed when setting is executed such that data is not downloaded by the navigation system according to the first embodiment of the present invention;
FIG. 8 shows the configuration of a navigation system according to a second embodiment of the present invention; and
FIG. 9 is a flow chart showing an operation that is performed when push-type content of the navigation system according to the second embodiment of the present invention is downloaded.

Hereinafter, embodiments of the present invention will be described in detail with reference to the drawings.

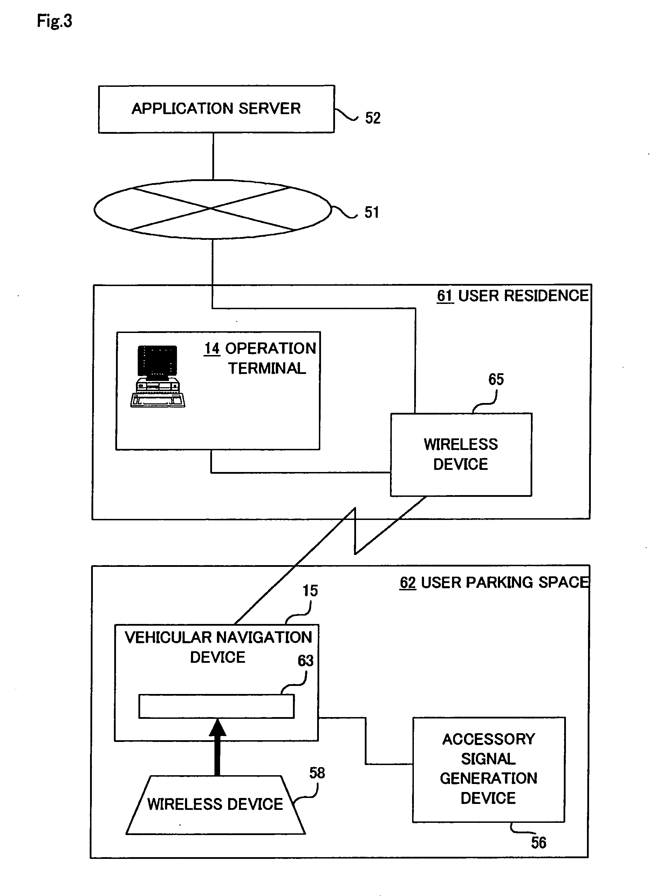

FIG. 3 shows the configuration of a navigation system in accordance with a first embodiment of the present invention.

In the figure, a vehicular navigation device 15 that is a navigation device for vehicular use that is mounted in a passenger vehicle, truck, bus, motor-bike, or the like. A wireless device 58 of this vehicular navigation device 15 is connected to an interface 63 and acts as a communication portion. The wireless device 58 is, for example, a wireless LAN device such as a wireless LAN card, and the interface 63, in the case that the wireless device 58 is a wireless LAN card, is a card slot into which the wireless LAN card is loaded by insertion. Moreover, the wireless device 58 may be initially incorporated within the vehicular navigation device 15. Note that, the configuration of the vehicle has been omitted from the figure. However, the vehicular navigation device 15 is supplied with electric power from a main power source, which is a battery, not shown, for use in the vehicle. Further, the vehicular navigation device 15 receives an accessory signal from an accessory signal generation unit 56 of the vehicle. When this accessory signal is received, the entire vehicular navigation device 15 starts up.

Moreover, in the figure, the vehicle, not shown, is parked in a user parking space 62, which is the parking space used by the user of the vehicle, namely, an operator such as a driver, a passenger, or an owner of the vehicle. A wireless device 65 that communicates with the wireless device 58 using a wireless LAN system is provided at a user residence 61, which is the residence at which the user lives.

Note that, the wireless device 65 is, for example, a wireless LAN adapter which communicates with the vehicular navigation device 15 using a wireless LAN system, by utilizing 2.4 (GHz) ISM band, 5.2 (GHz) band, or 19 (GHz) band sub-millimeter-waves, or the like, or infrared rays. The wireless LAN system in this case is, for example, IEEE802.11a, IEEE802.11b, IEEE802.11e, IEEE802.11g, or Bluetooth, or the like, which is adopted as a home wireless system. Note that the wireless device 65 may be a router or a home server provided with a storage unit that is used in a home network or LAN.

In the case that communication between the wireless device 58 and the wireless device 65 is carried out using a normal wireless LAN system, the potential communication range is a range that is roughly equivalent to a circle with a radius of 10 to 100 meters around the wireless device 65. Accordingly, it is assumed that the vehicle is parked within this range.

Moreover, an operation terminal 14 that is operated by the user is a type of computer that is provided with a calculation unit such as a CPU or MPU; a memory unit such as a semi-conductor memory or a magnetic disk; a display unit such as a CRT, a liquid crystal display, or an LED (Light Emitting Diode) display; an input unit such as a keyboard, a joy-stick, a touch panel, a tablet, a push button, a rotating dial or a remote controller; and an input-output interface, and the like. Further, the operation terminal 14 may be, for example, any type of device such as a personal computer, a mobile phone device, a PHS (Personal Handy-Phone System) device, a stationary telephone device, a PDA (Personal Digital Assistant), an electronic hand-held organizer, a mobile information terminal, a game machine, a digital television, or the like. The operation terminal 14 is connected to the wireless device 65 by wire or wirelessly, and can communicate with the vehicular navigation device 15 via the wireless device 65.

Moreover, the wireless device 65 is connected to a network 51. The network 51 is, for example, the Internet. However, the network 51 may be any type of network such as a wired or wireless public network, a dedicate line network, an intranet, LAN, WAN (Wide Area Network), a mobile phone network, or a PHS phone network. Alternatively, the network 51 may be a plurality of types of communication networks that are suitably combined. Moreover, it is preferable that an information supply device can be accessed via the network 51. This information supply device is a web server, or the like, that can supply various types of data such as map data, music data, image data, and character data. In this case, it is preferable that the network 51 is capable of high capacity, high speed communication. For example, in the case that the network 51 is the Internet, a broad band connection that is capable of high speed communication at a number of Mbps (Mega bit per second) or more is adopted. However, another communication system may be utilized. In this case, the wireless device 65 is a relay apparatus between the operation terminal 14 and the vehicular navigation device 15, and functions as an access point to the network 51 from the operation terminal 14 and the vehicular navigation device 15. Moreover, in the case that the wireless device 65 is a router or a home server, or the like, it also functions as a storage unit that temporarily stores data that is sent and received via the network 51.

An application server 52 acts as a server that is connected to the network 51, and distributes various types of data. Note that the application server 52 is provided at an information center, not shown. Moreover, the application server 52 is a type of computer that is provided with a calculation unit such as a CPU or MPU; a memory unit such as a semi-conductor memory or a magnetic disk; a display unit such as a CRT, a liquid crystal display, or an LED (Light Emitting Diode) display; an input unit such as a keyboard, a touch panel, a tablet, a push button, or a mouse; and an input-output interface, and the like. In this case, the application server 52 is, for example, a web server connected to the Internet, but it may be another type of device such as a personal computer, or a work station. Moreover, the application server 52 may be configured so as to be independent. Alternatively, the application server 52 may be a distributed server that organically connects a plurality of servers, or one system configured within a large computer.

The application server 52 distributes, via the network 51, navigation device use data used by the vehicular navigation device 15 such as map data, road data, photographic data and facilities information data including information about facilities such as hotels in each region, gasoline stations and tourist information centers; update programs for the vehicular navigation device 15; software for personal information management that can be utilized by the vehicular navigation device 15; application programs such as software for games; software for entertainment such as music and video data; news; traffic information; and weather information. Further, the application server 52 may function as a mail server that receives, stores and transmits electronic mail; and may function as a host station for personal computer communication that provides services such as an electronic notice board, electronic meetings, and a chat service. The application server 52 may obtain data by accessing other web servers, or the like. For example, the application server 52 may distribute information such as news, traffic information and weather information that is obtained by accessing web servers run by newspaper companies, television stations, news distribution companies, or the like.

Moreover, in the case that the application server 52 has a route search function and a position or facility search function like a normal vehicular navigation device, it is possible to establish a route, or search for locations or facilities by using the operation terminal 14 or the vehicular navigation device 15 to send the departure location, the target destination, search conditions, and the like, to the application server 52. Moreover, data concerning the established route, or the found location or facility, or the like, is sent back to the operation terminal 14 or the vehicle navigation device 15.

With this embodiment, while the vehicle is parked in the user parking space 62, the vehicular navigation device 15 can communicate via wireless device 65 with the application server 52 connected to the operation terminal 14 and the network 51 using the wireless LAN system. Given this, it is possible for the user to execute setting in advance such that data is automatically download when the vehicular navigation device 15 starts up due to receiving the accessory signal from the accessory signal generation device 56. Note that, the data may be directly downloaded from the application server 52 via the network 51. Alternatively, the data may be downloaded in advance from the application server 52, stored temporarily in the wireless device 65, and then downloaded therefrom. The data referred to here includes the previously mentioned navigation device use data, the update programs, the application programs, the game use software, the entertainment use software, and data concerning news, traffic information, weather information, the established route, and found locations and facilities.

For example, in the case that the application server 52 provides a latest version of the map data as the navigation device use data, the desired map data is downloaded temporarily to the operation terminal 14 or the wireless device 65 from the application server 52 via the network 51. Then, the map data is downloaded to the vehicular navigation device 15 by transferring it from the operation terminal 14 or the wireless device 65, whereby it is possible to update the version of the map data stored in the vehicular navigation device 15. Moreover, the data may be directly downloaded to the vehicular navigation device 15 from the application server 52 without temporarily downloading it to the operation terminal 14 or the wireless device 65.

Further, in the case that the vehicular navigation device 15 is a device capable of overwriting its drive program, the user may download an updated drive program to the vehicular navigation device 15 from the application server 52. Moreover, in the case that the vehicular navigation device 15 is provided with vehicle audio device functions, the user can edit music using the operation terminal 14, and then transfer the music to the vehicular navigation device 15 where it is stored. Further, in the case that the application server 52 distributes music, desired music can be temporarily downloaded to the operation terminal 14 or the wireless device 65 from the application server 52, and then transferred to the vehicular navigation device 15 where it is stored. Moreover, music may be directly downloaded from the application server 52 to the vehicular navigation device 15.

Further, in the case that the vehicular navigation device 15 functions as a reproducer of static images and video images, and the like, it is possible to store image data for films, and the like, in the vehicular navigation device 15, in a similar manner to music. Moreover, it is possible to store data for static images, video images, and the like, that have been filmed by the user with a digital camera or a video camera in the vehicular navigation device 15 by transferring the relevant data to the vehicular navigation device 15 from the operation terminal 14.

In the case that the vehicular navigation device 15 has a function that organizes and displays timetables, schedules, and the like, the user can utilize the operation terminal 14 and use PIM (Personal Information Management) software to create data for timetables, schedules, and the like. This data can then be transferred to the vehicular navigation device 15 and stored therein.

Moreover, even if the vehicle is parked at a location other than the user parking space 62, it is possible to download data to the vehicle navigation device 15. For example, a scenario can be envisage in which a wireless device like the wireless device 65 is provided at a parking lot at the journey destination (for example, in the parking lot of a commercial facility such as a department store, a supermarket, or a convenience store; the parking lot of a amusement facility like a theme park or a game center; the parking lot at a eating or drinking establishment such as a fast-food restaurant or a coffee shop; a parking lot at the periphery of a transportation-related facility such as a station or an airport; or at a gasoline station), with this wireless device being connected to the network 51. Accordingly, it is possible for the vehicle navigation device 15 to download data when parked in a parking lot provided with the wireless device, like those described above. In this case, in the same manner as when the vehicle is parked in the user parking space 62, it is possible to download map data, music, video data, and the like, to the vehicular navigation device 15 from the application server 52 by using the wireless LAN system. Accordingly, even at the journey destination, it is possible for the user to download desired data to the vehicular navigation device 15. Further, the vehicle may be parked at a pay parking lot, with the wireless device 65 connected to a computer that manages the pay parking lot. In this case, if data concerning the vehicle's parking time and parking fees that is managed by the computer is provided, this data may be downloaded from the wireless device 65 to the vehicular navigation device 15.

Moreover, the computer that manages the pay parking lot may provide information about various facilities like department stores and theme parks in the vicinity of the pay parking area. For example, data related to internal maps of the facilities, special offers, prize offers, opening times, special events, and the like may be provided. In this case, the data related to the various facilities may be downloaded to the vehicular navigation device 15 using the wireless LAN system. Accordingly, it is possible for the user to obtain data related to the various facilities in the vicinity of the pay parking lot.

In addition, a scenario can be envisaged in which the vehicle is parked in a parking space with a parking meter on a road, with a wireless device, like the wireless device 65, that is connected to the network 51 being provided in the parking meter. In this case, in a similar manner to when the vehicle is parked in the user parking space 62, it is possible to download map data, music, video data, and the like, to the vehicular navigation device 15 from the application server 52 using the wireless LAN system. As a result, the user can download desired data to the vehicle navigation device 15 even when at a journey destination.

Further, a scenario can be envisaged in which the vehicle is parked in a parking lot at the user's place of work, with a wireless device, like the wireless device 65, that is connected to the network 51 being provided in the parking lot. In this case, in a similar manner to when the vehicle is parked in the user parking space 62, it is possible to download map data, music, video data, and the like, to the vehicular navigation device 15 from the application server 52 using the wireless LAN system. As a result, the user can download desired data to the vehicle navigation device 15 even when at work.

Next, the configuration of the vehicular navigation device 15 of the first embodiment will be explained.

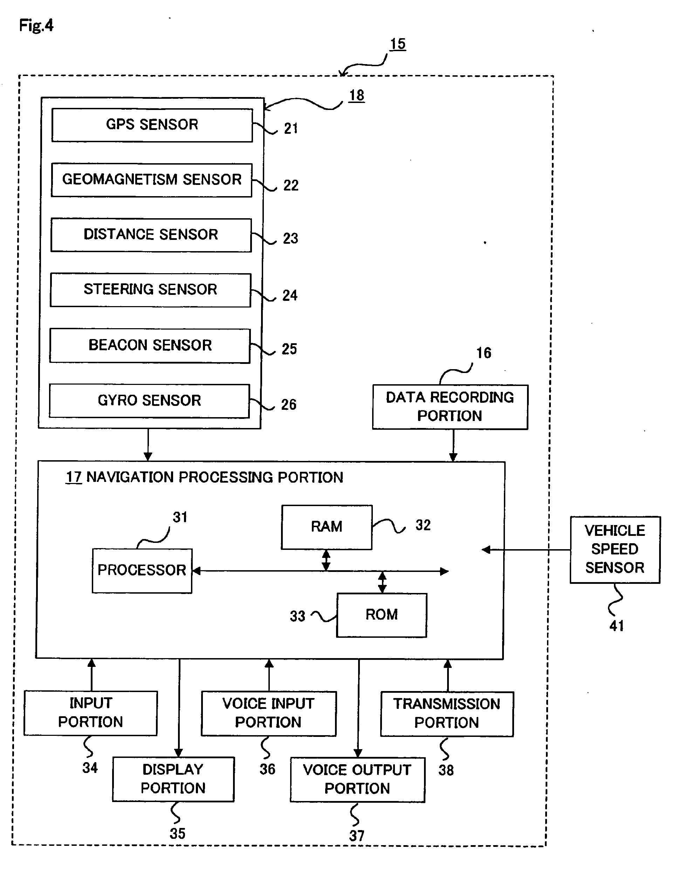

FIG. 4 shows the configuration of the vehicular navigation device 15 according to the first embodiment of the present invention.

In this embodiment, the vehicular navigation device 15 is a type of computer. In terms of function, as shown in FIG. 4, the vehicular navigation device 15 has a vehicle position information output portion 18 which detects a present position of the vehicle and which outputs vehicle position information; a data recording portion 16 which acts as a recording medium in which road data, and the like, is recorded; a navigation processing portion 17 that executes various types of calculation processing such as navigation processing; an input portion 34; a display portion 35; a voice input portion 36; a voice output portion 37; and a communication portion 38. It should be noted that the navigation processing portion 17 is connected to a vehicle speed sensor 41.

Moreover, the vehicle position information output portion 18 is configured from a GPS (Global Positioning System) sensor 21; a geomagnetism sensor 22; a distance sensor 23; a steering sensor 24; a beacon sensor 25; a gyro sensor 26; and an altimeter, not shown, and so on. Note that it is possible to omit, as appropriate, one or more of the GPS sensor 21, the geomagnetism sensor 22, the distance sensor 23, the steering sensor 24, the beacon sensor 25, the gyro sensor 26, the altimeter, and the like, if this is required bearing in mind production cost, and the like.

Moreover, the GPS sensor 21 detects the present position on the earth based on reception of a radio wave generated by a man-made satellite; the geomagnetic sensor 22 detects the directional orientation of the vehicle based on measurement of geomagnetism; and the distance sensor 23 detects a distance, etc., between the vehicle and a given position on the road. For the distance sensor 23, for example, it is possible to use a device that estimates a revolution number of the vehicle wheels and detects the distance based on this revolution number; or alternatively, a device that estimates an acceleration rate and detects the distance by performing double integration of this acceleration rate.

The steering sensor 24 detects a steering angle. For the steering sensor 24, for example, it is possible to use an optical rotation sensor or a rotating resistance sensor attached to a rotating portion of a steering wheel, not shown; or an angle sensor attached to the wheels.

The beacon sensor 25 detects the present position based on reception of position information from beacons provided along the road. The gyro sensor 26 detects a rotational angular velocity of the vehicle, namely, a turning angle. For the gyro sensor 26, for example, a gas rate gyro, a vibration gyro, or the like, is used. Moreover, it is possible to detect the directional orientation of the vehicle by integrating the turning angle detected by the gyro sensor 26.

Note that the GPS sensor 21 and the beacon sensor 25 can independently detect the present position. Further, it is possible to detect the present position by combining the distance detected by the distance sensor 23, and the directional orientation detected by the geomagnetism sensor 22 and the gyro sensor 26. In addition, it is possible to detect the present position by combining the distance detected by the distance sensor 23 and the steering angle detected by the steering sensor 24.

The data recording portion 16 is provided with a data base composed of map data files, intersection data files, node data files, road data files, photograph data files, and facilities information data files in which facilities information about hotels in each region, gasoline stations, tourist information centers, and the like, is recorded. Moreover, as well as data for searching for routes, various other types of data, detailed below, for display on a screen, not shown, of the display portion 35 are recorded in the data recording portion 16. This data for display includes: guidance maps for along the established route; photographs, split screen maps that show intersections or key features along the route; distances to upcoming intersections and direction of travel at upcoming intersections; and other guidance information. Note that various types of data for outputting predetermined information using the voice output portion 37 is also recorded in the data recording portion 16.

It should be noted that intersection data, node data, and road data are respectively recorded in the intersection data files, the node data files, and road data files. Road conditions are displayed on the screen using the intersection data, the node data and the road data. Further, the intersection data includes the type of the intersection, namely, for example, whether the intersection has traffic lights, or not. The node data includes, at the least, the positions and shapes of the roads of the map data recorded in the map data files. This node data is comprised of data that shows branch points of actual roads (including intersections, T-junctions, and the like), node points, and links that connect each of the node points. In addition, the node points, at the least, indicate the position of bends in the roads.

The road data includes data about the road itself, namely, road width, gradient, cant, altitude, bank, the state of the road surface, the number of road lanes, points where the number of road lanes reduces, points where the width of the road narrows, and the like. Note that, in the case of a highway or a trunk-road, data for the lanes on opposing sides is stored respectively as separate road data, and processed as two separate roads. For example, in the case of a trunk road with two lanes or more on each side, the data for the trunk road is processed as two separate roads and stored in the road data as respective independent roads for the upstream lane and the downstream lane. Further, with regard to comers, data is included such as curve radius, intersections, T-junctions, and comer entry points. Further, with regard to road attributes, data is included such as railway crossings, highway entry-exit ramp ways, highway toll-collection booths, downward sloping roads, upward sloping roads, and road type (national trunk road, main local road, local road, highway, etc.).

The navigation processing portion 17 is configured from the processor 31 which acts as a calculation unit for the CPU, MPU, and the like, that execute overall control of the vehicular navigation device 15; a RAM 32 used as working memory when the processor 31 executes various types of calculation processing; and a ROM 33 which acts as a storage medium on which control programs, as well as various types of program are stored. The various types of program execute destination route searches, provide running guidance along the route, search for locations and facilities, and the like. Further, the navigation processing portion 17 is connected to the input portion 34, the display portion 35, the voice input portion 36, the voice output portion 37, and the communication portion 38, and executes route searches, provision of running guidance along the route, and searches for locations, facilities, and the like.

Moreover, the storage medium which is computer-readable and on which the navigation programs are stored is not limited to being a semi-conductor memory. The storage medium may be any form of storage medium such as a magnetic tape, a magnetic disk, a magnetic drum, a CD-R/W, an MD, a DVD-RAM, a DVD-R/W, an optical disk, an MO, an IC card, an optical card, or a memory card.

The data recording portion 16 and the ROM 33 are configured from a magnetic core, a semi-conductor memory, or the like, not shown. Further, the data recording portion 16 and the ROM 33 may use any type of storage medium such as a magnetic tape, a magnetic disk, a magnetic drum, a CD-R/W, an MD, a DVD-RAM, a DVD-R/W, an optical disk, an MO, an IC card, an optical card, or a memory card. The storage medium may be installed in advance in the vehicular navigation device 15, and can be replaced as appropriate by the user.

According to this embodiment, various programs are stored in the ROM 33, and various types of data are stored in the date recording portion 16. However, the programs and the data may be stored in the same manner in an external storage medium. In this case, for example, a storage medium like a flash memory, or the like, not shown, is provided in the navigation processing portion 17, whereby it is possible to read the programs and the data from the external storage medium and write them on the storage medium. Accordingly, it is possible to update the programs and the data by replacing the external storage medium. In this manner, it is possible to start up the various programs stored on the storage medium and execute various types of processing based on the data. Note that, the external storage medium may be of any type, such as, for example, a magnetic tape, a magnetic disk, a magnetic drum, a CD-R/W, an MD, a DVD-RAM, a DVD-R/W, an optical disk, an MO, an IC card, an optical card, or a memory card.

The communication portion 38 is provided with the card slot as the interface 63, and executes communication with the wireless device 65 via the wireless LAN card which is inserted in the card slot as the wireless device 58. Moreover, the communication portion 38, for example, can receive various types of data such as: road information about congestion, and the like, received from an information sensor, or the like, not shown; traffic accident information; and D-GPS information that detects a detection difference of the GPS sensor 21. Further, the communication portion 38 is preferably provided with a specific low power wireless device, not shown. In addition, according to this embodiment, when data distributed from the application server 52 connected to the network 51 is downloaded by the communication portion 38, the data is downloaded to a readable/writeable memory device, such as a storage medium which may be the RAM 32, a flash memory, a hard disk, or the like. In this case, the storage medium functions as a data storage portion and stores the data downloaded from the application server 52. Further, it is possible to use the operation terminal 14 such that the data distributed from the application server 52 is temporarily downloaded to the operation terminal 14, and following this, is downloaded to the storage medium of the vehicular navigation device 15 from the operation terminal 14.

The input portion 34 is configured from an operation key, a push button, a jog dial, a cross-shaped switch-key, or the like, that is provided on a body of the vehicular navigation device 15. The input portion 34 is used to correct the vehicle position when running starts, and input the destination, etc. Note that, the input portion 34 may also be a remote controller. Further, in the case that the display portion 35 has a touch panel, it is preferable that the input portion 34 is configured from an operation switch like an operation key or an operation menu that is displayed on the screen of the display portion 35. In this case, in the same manner as a normal touch panel, it is possible to execute input by pushing or touching the operation switch.

Further, operation guidance, an operation menu, guidance about the operation key, the route from the present position to the destination, guidance information along the route, and the like, are displayed on the screen of the display portion 35. For the display portion 35, it is possible to use a CRT display, a liquid crystal display, an LED display, a plasma display, a hologram device which projects a hologram on to a windshield, or the like.

The voice input portion 36 is configured from a microphone, or the like, not shown, and makes it possible to input necessary information by voice. Further, the voice output portion 37 is provided with a voice synthesis device and a speaker, not shown. The voice output portion 37 provides the user with audio information by using the speaker to output audio information like, for example, guidance information and speed shift information, which is generated by a voice that is synthesized by the voice synthesis device. Note that, as well as the voice synthesized by the voice synthesis device, the voice output portion 37 may use the speaker to output various types of sounds, and various types of guidance information that are pre-recorded on a tape, a memory, or the like.

Hereinafter, a software configuration of the vehicular navigation device 15 according to the first embodiment will be described.

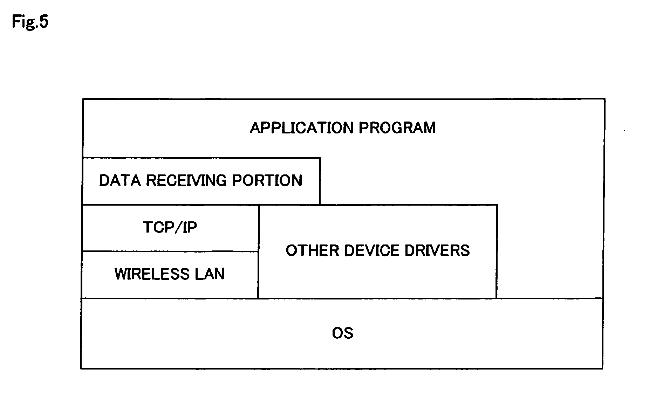

FIG. 5 shows the software configuration in the case that an on-board apparatus according to the first embodiment of the present invention is the navigation device for the vehicle.

In this embodiment, the operating system (OS) installed in the vehicular navigation device 15 may be of any type, for example, Windows (registered trademark) or MAC OS (registered trademark) that are used in standard personal computers. In addition, a network driver that is run by the operating system is a wireless LAN program and TCP/IP (Transmission Control Protocol/Internet Protocol) program that function as a device driver for the wireless device 65. This network driver is installed in the vehicular navigation device 15. It should be noted that device drivers for devices other than the wireless device 65 are also installed.

Moreover, the application programs for executing the navigation processing, and the like, are installed in the vehicular navigation device 15. Note that the application program includes a program for a data receiving portion that receives data.

Next, the operation of the navigation system with the above described configuration will be explained.

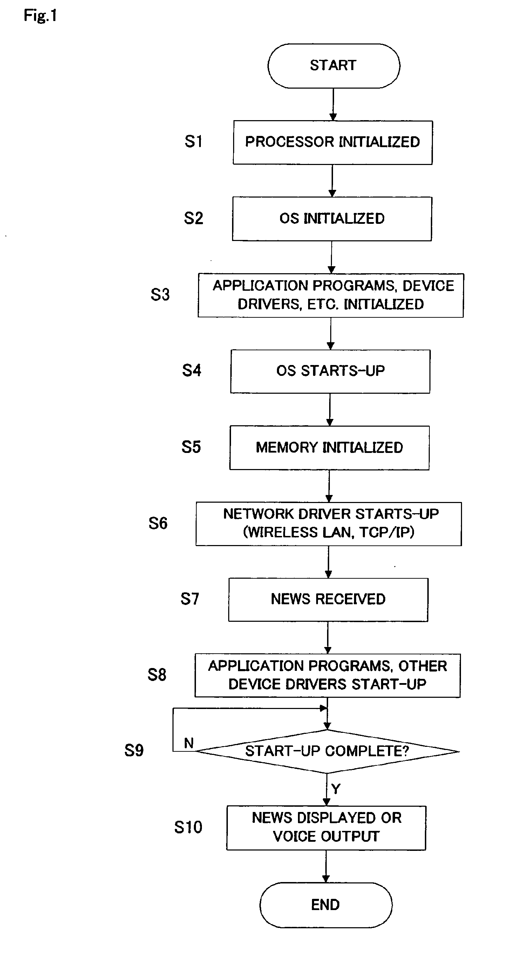

FIG. 1 is a flow chart showing an operation that is performed in the case that push-type content of the navigation system according to the first embodiment of the present invention is downloaded.

According to this embodiment, in the case that the vehicular navigation device 15 is set to download data when it starts up, the data is downloaded from the application server 52 prior to when the vehicular navigation device 15 completes start-up. Note that, the data may be any type of data, and furthermore, the data may be downloaded temporarily to the operation terminal 14 or the wireless device 65, and then transferred to the vehicular navigation device 15 thereafter. Here, an operation when news is directly downloaded to the vehicular navigation device 15 from the application server 52 will be explained.

In this case, the user operates the vehicular navigation device 15 in advance and executes setting such that news is automatically downloaded from the application server 52 when the vehicular navigation device 15 starts up due to receiving the accessory signal from the accessory signal generation device 56. Note that the vehicular navigation device 15 may be set with a default setting (initial setting) such that when start up takes places, the news is automatically downloaded from the application server 52. Further, the vehicular navigation device 15 may be set to download in accordance with settings set by the user the last time the vehicular navigation device 15 was operated.

Further, the vehicular navigation device 15 is set to directly download the news from the application server 52 via the wireless device 65 and the network 51. In this case, the news is push-type content that is transferred by the application server 52 using "push-technology". When the vehicular navigation device 15 is connected to the network 51 via the wireless device 65, this push-type content news is pro-actively transmitted to the vehicular navigation device 15 from the application server 52. Further, the fact that news is downloaded to the vehicular navigation device 15 is pre-recorded in the application server 52.

Further, it is possible to execute setting such that data other than the news is downloaded to the vehicular navigation device 15 when start up takes place. In this case, in addition to push-type content, the vehicular navigation device 15 may download and pro-actively obtain pull-type content by accessing the application server 52. Further, it is possible to execute setting such that no data whatsoever is downloaded when the vehicular navigation device 15 starts up.

In the operation, first, the user turns a switch, not shown, of the accessory signal generation device 56 provided in the vehicle to ON, whereby the accessory signal generation device 56 switches the accessory signal to ON. In a normal vehicle, the switch of the accessory signal generation device 56 is formed integrally with an ignition switch for an engine. Accordingly, when the user gets into the vehicle and starts the engine, the accessory signal is switched to ON. Note that, when the ignition switch is turned to ON, the switch of the accessory signal generation device 56 is also turned to ON. However, the configuration is such that, in addition, the accessory signal generation device 56 alone can be turned to ON. In this case, when the accessory signal is switched to ON, electric power is supplied to the vehicular navigation device 15, thus causing the vehicular navigation device 15 to start up.

Next, the processor 31 of the vehicular navigation device 15 is initialized. Then, the operating system of the vehicular navigation device 15 is initialized, and in addition, the application programs, the device drivers, and the like, are initialized. Following this, the operating system starts up, and the storage medium of the vehicular navigation device 15, which is the memory such as the RAM 32, and the like, is initialized.

Next, the wireless LAN program and the TCP/IP program, which act as the network driver run by the operating system, start up. Accordingly, the wireless device 58 that acts as the communication portion starts up, communication is established with the wireless device 65 provided at the user residence 61, and the vehicular navigation device 15 is connected to the network 51. Then, the news, which is the push-type content, is transmitted to the vehicular navigation device 15 from the application server 52 connected to the network 51. Accordingly, the vehicular navigation device 15 receives the news from the application server 52. The received news is stored in the storage medium, which is the RAM 32, and the like, acting as the data storage portion. Note that, at this time, the program for the data receiving portion, which is one of the application programs, has already been started up. Note that the news may be obtained by the application server 52 by accessing a web server that is operated by a newspaper company, a television station, or a news distribution company.

Next, the application programs and other device drivers start up. Accordingly, the vehicular navigation device 15 can execute the navigation processing. Then, once all of the application programs and the device drivers have started up, it is determined whether start up of the vehicular navigation device 15 is completed.

Following this, if it is determined that start up of the vehicular navigation device 15 is completed, the received news stored on the storage medium is displayed on the screen of the display portion 35 or voice output from the voice output portion 36 using TTS which is a software for converting characters and sentences to sound. Accordingly, the user is able to check the news received from the application server 52. With this, the processing for downloading the news is completed.

Next, the flow chart of FIG. 1 will be explained. In step S 1, the processor 31 is initialized. In step S2, the operating system is initialized. In step S3, the application programs, the device drivers, and the like, are initialized. In step S4, the operating system starts up. In step S5, the memory of the vehicular navigation device 15 is initialized. In step S6, the wireless LAN program and the TCP/IP program, which act as the network driver, start-up. In step S7, the news is received from the application server 52. In step S8, the application programs and the other device drivers start-up. In step S9, it is determined whether the vehicular navigation device 15 has completed start-up or not. In the case that start-up is completed, the routine proceeds to step S10; in the case that it is not completed, the routine waits until completion. In step S 10, the news is displayed or voice output.

Next, an explanation will be given concerning an operation in the case that the vehicle navigation device 15 accesses the application server 52 in order to download and pro-actively obtain pull-type content.

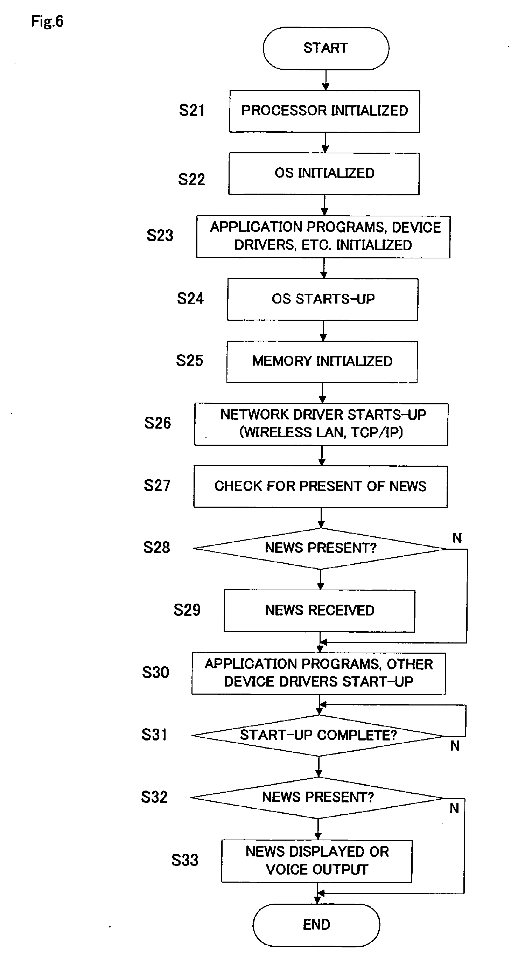

FIG. 6 is a flow chart showing the operation that is performed in the case that the navigation system according to the first embodiment of the present invention downloads pull-type content.

Note that, in this example, the pull-type content is news. In the case that it is possible to obtain specific types of news, setting can be executed such that these specific types of news are downloaded. For example, the user may operate the vehicular navigation device 15 in advance to execute setting such that only specific types of news, like sports news, economics news, entertainment news, or the like, are downloaded from the application server 52. Alternatively, setting may be executed such that only non-updated news, namely, news that has not yet been downloaded, is downloaded from the application server 52; or such that only news reported since the evening of the previous day is downloaded from the application server 52. Note that, the vehicular navigation device 15, for its default setting, may be set to download only predetermined types of news. Alternatively, the vehicular navigation device 15 may be set to download in accordance with settings set by the user the last time the vehicular navigation device 15 was operated.

Note that the operation from when the user turns the switch of the accessory signal generated device 56 provided in the vehicle to ON, until when the wireless LAN program and the TCP/IP program that act as the network driver start-up is the same as that for when push-type content is downloaded. Accordingly, an explanation will be omitted here.

Next, once the vehicular navigation device 15 is connected to the network 51, the vehicular navigation device 15 accesses the application server 52 and checks whether any of the pre-specified types of news are present or not in the application server 52, namely, if there is any news. Then, the vehicular navigation device 15 determines whether there is any news based upon the check result. In the case there is news, the news is received from the application server 52. Note that the received news is stored in the storage unit, which is the RAM 32, or the like, that acts as the data storage portion. In this case, it is assumed that the program for the data receiving portion has already been started up. Following this, the application programs and the other device drivers start-up. In the case that there is no news, the application programs and the other device drivers start-up without reception of the news taking place.

Then, once all of the application programs and the other device drivers have started up, it is determined whether start-up of the vehicular navigation device 15 is completed. Following this, if it is determined that start up is completed, it is determined whether the vehicular navigation device 15 has any received news or not. In the case there is received news, this news, which is stored in the storage medium, is displayed on the screen of the display portion 35 or voice output from the voice output portion 36 using TTS, which is the software for converting characters and sentences to sound. Accordingly, the user is able to check the specified news received from the application server 52. With this, the process of downloading the news is completed. Note that when there is no received news, processing for downloading the news is terminated at that point.

Next, the flow chart of FIG. 6 will be explained. In step S21, the processor 31 is initialized. In step S22, the operating system is initialized. In step S23, the application programs, the device drivers, and the like, are initialized. In step S24, the operating system starts up. In step S25, the memory of the vehicular navigation device 15 is initialized. In step S26, the wireless LAN program and the TCP/IP program that act as the network driver start-up. In step S27, it is checked whether there is any news. In step S28, it is determined whether there is any news in the application server 52. In the case there is news, the routine proceeds to step S29; in the case there is not, the routine proceeds to step S30. In step S29, the news is received from the application server 52. In step S30, the application programs and the other device drivers start-up. In step S31, it is determined whether the vehicular navigation device 15 has completed start-up or not. In the case that start-up is completed, the routine proceeds to step S32; in the case that it is not completed, the routine waits unit completion. In step S32, it is determined whether there is any received news. In the case there is, the routine proceeds to step S33; in the case there is not, the processing is terminated. In step S33, the news is displayed or voice output.

Next, an explanation will be given of an operation when setting is executed such that downloading does not take place when the vehicular navigation device 15 starts up.

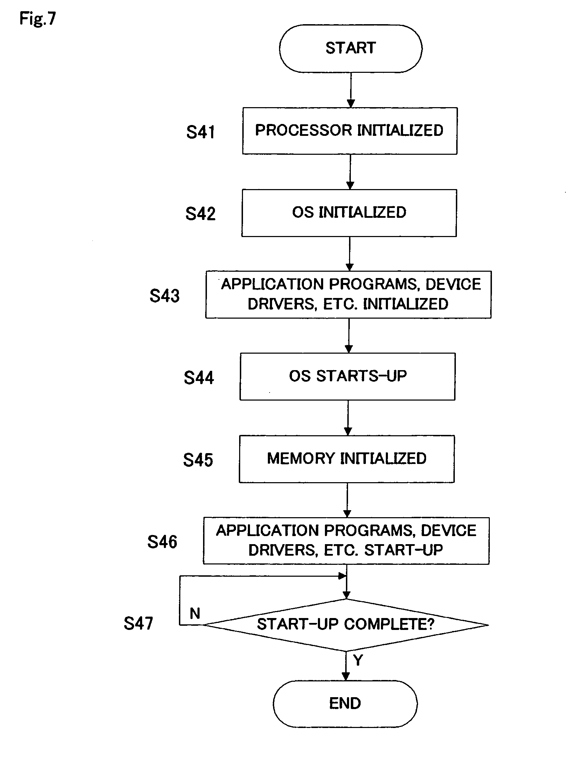

FIG. 7 is a flow chart showing the operation that is performed when setting is executed such that data is not downloaded by the navigation system according to the first embodiment of the present invention.

Note that, in this example, the user operates the vehicular navigation device 15 in advance to execute setting such that no data whatsoever is downloaded when the vehicular navigation device 15 starts up.

In this case, when the user turns the switch of the accessory signal generation device 56 provided in the vehicle to ON, the accessory signal is switched to ON, whereby electric power is supplied to the vehicular navigation device 15 thus causing it to start up. Then, the vehicular navigation device 15 is initialized. Next, the processor 31 of the vehicular navigation device 15 is initialized. Then, the operating system of the vehicular navigation device 15 is initialized, and in addition, the application programs, device drivers, and the like, are initialized. Following this, the operating system starts up, and the storage medium, which is the memory such as the RAM 32, and the like, is initialized.

Next, the application programs and the device drivers start up. Accordingly, the vehicular navigation device 15 can execute the navigation processing. Then, following start up of all of the application programs and the device drivers, it is determined whether start up of the vehicular navigation device 15 is completed. Following this, in the case that start up is completed, the processing is terminated.

Hereinafter, the flow chart of FIG. 7 will be explained. In step S41, the processor 31 is initialized. In step S42, the operating system is initialized. In step S43, the application programs, the device drivers, and the like, are initialized. In step S44, the operating system starts up. In step S45, the memory of the vehicular navigation device 15 is initialized. In step S46, the application programs, device drivers, and the like, start-up. In step S47, it is determined whether the vehicular navigation device 15 has completed start-up or not. In the case that start-up is completed, the processing is terminated; in the case that it is not completed, the routine waits until completion.

In this manner, according to this embodiment, when setting is executed such that data is downloaded when the vehicular navigation device 15 starts up, the data is downloaded from the application server 52 prior to when start-up of the vehicular navigation device 15 is completed. As a result, as soon as start-up of the vehicular navigation device 15 is completed, the data is displayed on the screen of the display portion 35 or voice output from the voice output portion 37. Accordingly, the user is able to rapidly check and use the data.

Moreover, at the time of start-up, the vehicular navigation device 15 starts up the network driver prior to the other device drivers and application programs, and executes communication. Accordingly, the speed of communication processing is increased, and it is possible to rapidly download data.

Generally, the other device drivers and application programs are assigned higher priority in the processing of the processor 31 than the network driver. Accordingly, when the other device drivers and application programs start-up, the tasks thereof interrupt the tasks of the network driver, whereby the processing of the processor 31 is slowed. However, in contrast to this, according to this embodiment, the network driver is started up prior to the other device drivers and application programs. Thus, other tasks do not cause interruption, and the tasks of the network driver are processed by the processor 31. Accordingly, the speed of the communication processing is increased, and it is possible to quickly download data.

In addition, according to this embodiment, the user can operate the vehicular navigation device 15 in advance to execute setting such that only certain types of data are downloaded. Accordingly, the user can quickly check and use the required data when the vehicular navigation device 15 starts up. Further, non-required data is not downloaded. Thus, the user is saved the trouble of having to check non-required data.

Moreover, the user can operate the vehicular navigation device 15 in advance to execute setting such that no data whatsoever is downloaded. Accordingly, non-required data is not downloaded, and the user is saved the trouble of having to check non-required data.

Next, a second embodiment of the present invention will be explained. Note that elements having the same structure as equivalent elements in the first embodiment are denoted with the same reference numerals and an explanation thereof is omitted. Further, an explanation is also omitted of operations and effects that are the same as those of the first embodiment.

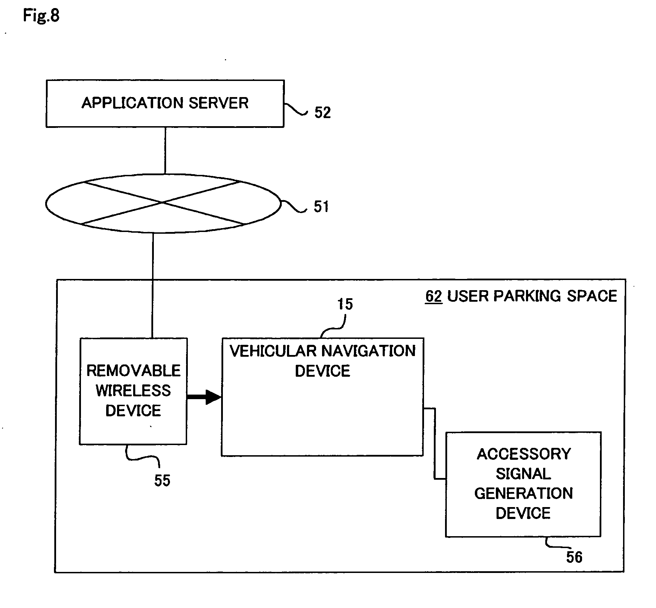

FIG. 8 shows the configuration of a navigation system according to the second embodiment of the present invention.

According to this embodiment, a removable wireless device 55 is adopted instead of the wireless device 58 of the first embodiment. This removable wireless device 55 is, for example, a cellular terminal like a mobile phone device or a PHS phone device. However, it is possible to use any device which has a mobile communication function and which can be connected with the network 51 so as to allow communication. Further, the user can, when necessary, connect the removable wireless device 55 to the vehicular navigation device 15 via a connection cable, or the like. Accordingly, the vehicular navigation device 15 can be connected to the network 51 so as to allow communication.

According to this embodiment, the removable wireless device 55 is connected with the network 51 so as to allow communication. Thus, the wireless device 58 and the operation terminal 14 provided in the user residence 61 in the first embodiment are no longer necessary. The configuration of other elements of the second embodiment are the same as those of the first embodiment, and thus an explanation thereof will be omitted.

Next, an operation that is performed when data is downloaded when start up of the vehicular navigation device 15 according to the second embodiment takes place will be explained.

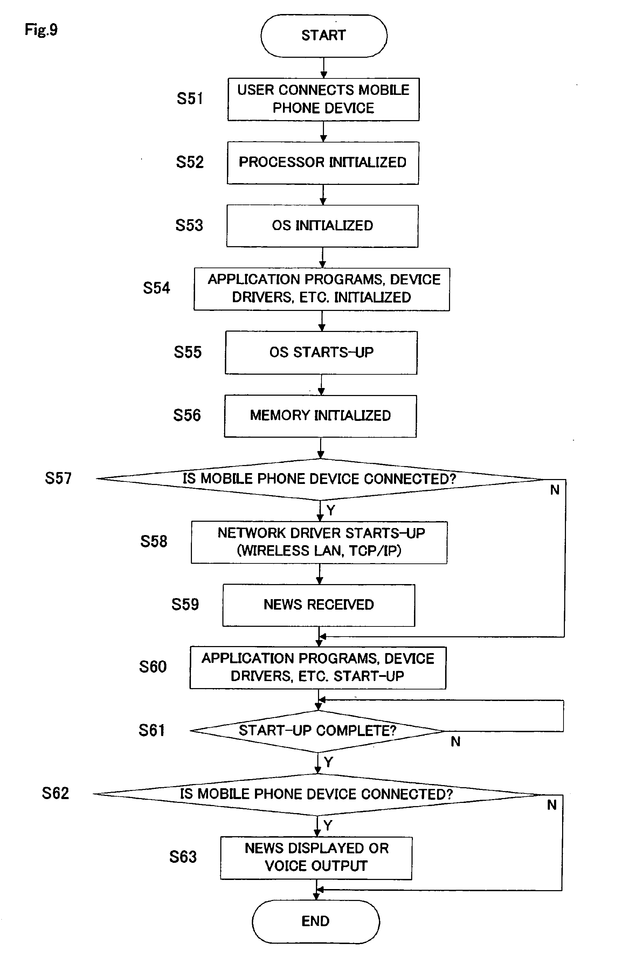

FIG. 9 is a flow chart showing an operation that is performed when push-type content of the navigation system according to the second embodiment of the present invention is downloaded.

In the second embodiment, in a similar manner to the first embodiment, when setting is executed such that data is downloaded when the vehicular navigation device 15 starts up, data is downloaded from the application server 52 prior to the completion of start up of the vehicular navigation device 15. Moreover, the data may be any type of data. However, here, an explanation will be given for the case when the data is news.

In this case, it is assumed that the user has operated the vehicle navigation device 15 in advance to execute setting such that news is automatically downloaded from the application server 52 when the vehicular navigation device 15 starts up as a result of receiving the accessory signal from the accessory signal generation device 56. Note that the vehicular navigation device 15 may be set with a default setting such that when start-up takes places the news is automatically download from the application server 52. Moreover, the vehicular navigation device 15 may be set to download in accordance with settings set by the user the last time the vehicular navigation device 15 was operated.

Further, prior to start-up of the vehicular navigation device 15, the user connects the removable wireless device 55 to the vehicular navigation device 15 using the connection cable, or the like. In this example, the removable wireless device 55 is a mobile phone device. Accordingly, the vehicular navigation device 15 can directly download news from the application server 52 via the network 51. In this case, the news is push-type content. When the vehicular navigation device 15 is connected to the network 51 via the mobile telephone device, this news is pro-actively transmitted to the vehicular navigation device 15 from the application server 52. Further, the fact that news is downloaded to the vehicular navigation device 15 is pre-recorded in the application server 52.

Further, it is possible to execute setting such that data other than the news is downloaded to the vehicular navigation device 15 when start up takes place. In this case, in addition to push-type content, the vehicular navigation device 15 may download and pro-actively obtain pull-type content by accessing the application server 52. Further, it is possible to execute setting such that no data whatsoever is downloaded when the vehicular navigation device 15 starts up.

In the operation, first, the user connects the mobile telephone device, which acts as the removable wireless device 55, to the vehicular navigation device 15 using the connection cable, or the like. Next, the user turns the switch, not shown, of the accessory signal generation device 56 provided in the vehicle to ON, whereby the accessory signal switches to ON. Accordingly, electric power is supplied to the vehicular navigation device 15 and the vehicular navigation device 15 starts up.

Next, the processor 31 of the vehicular navigation device 15 is initialized. Then, the operating system of the operating system of the vehicular navigation device 15 is initialized, and in addition, the application programs, device drivers, and the like, are initialized. Following this, the operating system starts up, and the storage medium of the vehicular navigation device 15, which is the memory such as the RAM 32, and the like, is initialized.

Next, it is determined whether the vehicular navigation device 15 is connected to the mobile phone device. Then, in the case that the mobile phone device is connected, the wireless LAN program and the TCP/IP program that act as the network driver run by the operating system start up. Accordingly, the vehicular navigation device 15 is connected to the network 51 via the mobile phone device. Then, the news, which is the push-type content from the application server 52 connected to the network 51, is transmitted to the vehicular navigation device 15. Accordingly, the vehicular navigation device 15 receives the news from the application server 52. The received news is stored in the storage medium, which is the RAM 32, and the like, acting as the data storage portion. Note that, at this time, the program for the data receiving portion, which is one of the application programs, has already been started up.

Next, the application programs and the other device drivers start up. Accordingly, the vehicular navigation device 15 can execute the navigation processing. Note that, in the case that the mobile phone device is not connected, the application programs and device drivers start up in that state. Then, once all of the application programs and the device drivers have started up, it is determined whether start up of the vehicular navigation device 15 is completed.

Following this, if it is determined that start up of the vehicular navigation device 15 is completed, it is determined whether the mobile phone device is connected to the vehicular navigation device 15. In the case that the mobile phone is connected, the news stored on the storage medium is displayed on the screen of the display portion 35 or voice output from the voice output portion 37 using TTS which is the software for converting characters and sentences to sound. Accordingly, the user is able to check the specified types of news received from the application server 52. With this, the processing for downloading the news is completed. Note that, in the case that the mobile phone device is not connected, the processing for downloading the news is completed as is.

Next, the flow chart of FIG. 9 will be explained. In step S51, the user connects the mobile phone device to the vehicular navigation device 15. In step S52, the processor 31 is initialized. In step S53, the operating system is initialized. In step S54, the application programs, the device drivers, and the like, are initialized. In step S55, the operating system starts up. In step S56, the memory of the vehicular navigation device 15 is initialized. In step S57, it is determined whether the mobile phone device is connected to the vehicular navigation device 15; in the case that the mobile phone device is connected, the routine proceeds to step S58, in the case that it is not, the routine proceeds to step S60. In step S58, the wireless LAN program and the TCP/IP program, which act as the network driver, start-up. In step S59, the news is received from the application server 52. In step S60, the application programs and the other device drivers start-up. In step S61, it is determined whether the vehicular navigation device 15 has completed start-up or not. In the case that start-up is completed, the routine proceeds to step S62; in the case that it is not completed, the routine waits unit completion. In step S62, it is determined whether the mobile phone device is connected to the vehicular navigation device 15. In the case that the mobile phone device is connected, the routine proceeds to step S63; in the case that it is not connected, the processing is terminated. In step S63, the news is displayed or voice output.

In this manner, according to this embodiment, for example, the removable wireless device 55, which is the cellular terminal, namely, the mobile phone device, the PHS phone device, or the like, is capable of being connected to the network 51 so as to allow communication. Further, this removable wireless device 55 is connected to the vehicular navigation device 15. As a result, regardless of the location of the vehicle, it is possible to download data when the vehicular navigation device 15 starts up.

Note that, the present invention is not limited to the above described embodiments. Various modifications based upon the spirit of the present invention are possible, and come within the scope of the present invention.

As described above, a navigation device is provided with a communication portion that is capable of communication with a server that distributes data, and a data storage portion that stores data downloaded from the server. When start-up of the vehicular navigation device is initiated, communication with the server is executed and data is downloaded prior to the completion of start-up.

## Claims

1. A navigation device comprising:
a communication portion (**58**) that is capable of communication with a server (**65**) that distributes data; and
a data storage portion (**16**) that stores data that is downloaded from the server, wherein
when start-up of the navigation device (**15**) is initiated, communication with the server is executed and data is downloaded prior to completion of start-up.

2. The navigation device according to claim 1, further comprising:
at least one of a display portion (**35**) and a voice output portion (**36**), wherein
after start-up of the navigation device is completed, data stored in the data storage portion (16) is at least one of displayed on the display portion, and voice output from the voice output portion.

3. The navigation device according to claim 1 or 2, wherein
when an operating system starts up following initiation of start-up of the navigation device (**15**), a network driver starts up and data is downloaded, and then start-up of a device driver other than the network driver and an application program is executed.

4. The navigation device according to any one of claims 1 to 3, wherein
data that is pre-set is downloaded from the server.

5. The navigation device according to any of claims 1 to 4, wherein
the communication portion (**58**) is one of a wireless local area network device and a removable cellular terminal.

6. A method for operating a navigation device comprising a communication portion (**58**) that is capable of communication with a server (**65**) that distributes data; and a data storage portion (**16**) that stores data that is downloaded from the server, the method comprising the steps of
executing, when start-up of the navigation device is initiated (**S1 to S4**), communication (**S6**) with the server and downloading (**S7**) data is prior to completion of start-up (**S8, S9**).

7. The method according to claim 8, wherein the navigation device further comprises at least one of a display portion (**35**) and a voice output portion (**36**), further comprising the steps of
displaying on the display portion and/or voice outputting from the voice output portion (**S10**), after start-up of the navigation device is completed (**S9**)

8. The method according to claim 6 or 7, further comprising the steps of
starting an operating system (**S4**) following initiation of start-up of the navigation device (**15**),
starting a network driver (**S6**) and downloading data following starting the operating system, and
starting up of a device driver other than the network driver (**S8**) following the starting of the network driver and executing an application program.

9. The method according to any one of claims 6 to 8, further comprising the step of
downloading data, that is pre-set, from the server.

10. The method according to any of claims 6 to 9, wherein
the communication portion (**58**) is one of a wireless local area network device and a removable cellular terminal.
